# EUROPEAN PATENT SPECIFICATION

(11) **EP 1 927 768 B1**
(45) Date of publication and mention of the grant of the patent: **13.03.2013**
(21) Application number: 07254609.6
(22) Date of filing: 28.11.2007
(51) Int. Cl.: F16C 17/06

(54) **Tilting pad thrust bearing**
Kippsegment-Schublager
Palier axial à patins

(30) Priority: 01.12.2006 GB 0623989
(43) Date of publication of application: 04.06.2008
(73) Proprietor: Waukesha Bearings Limited, Polmadie, Glasgow G42 0PT (GB)
(72) Inventor: New, Nigel Henry, Harrow Middlesex HA3 7LJ (GB)
(74) Representative: Harrison Goddard Foote

(56) References cited:
- GB-A- 2 325 029
- US-A- 1 361 073
- US-A- 1 445 188
- US-A- 2 168 345
- US-A- 4 311 350

## Description

This invention relates to a tilting pad thrust bearing for apparatus having a rotating shaft which carries a thrust load.

### BACKGROUND

Tilting pad thrust bearing arrangements are well known per se, having discrete bearing pads which transmit axial thrust forces.

The supporting carrier means for the bearing pads is formed either as a metal ring of such thickness as to support the thrust loads without deformation or sometimes as a prepared surface of the apparatus housing the bearing arrangement. In either case it is conventional for the pad-supporting face of the carrier means to be substantially flat in the axial direction, except possibly for lubricant nozzles at the surface, and for the face of each thrust pad opposite to a bearing surface to be machined away except at a central or circumferentially off set location to leave a radially-extending fulcrum ridge by way of which the pad is supported on said supporting face of the carrier means and about which fulcrum ridge it is able to make limited tilting movement.

It will be appreciated that in the case of individual pads or an integral ring of such pads, the provision of such fulcrum ridge on the supported pad surfaces involves an additional and non-trivial manufacturing stage.

GB-A-1535165 describes a thrust bearing arrangement wherein parallel surfaced bearing pads are supported on a smooth faced carrier by way of an intervening plate machined such that it presents an upstanding fulcrum ridge to each bearing pad. Whereas this construction permits the bearing pads to be of simpler and cheaper construction, the machined plate nevertheless requires considerable manufacturing effort.

In use, such thrust bearings are typically provided with a supply of lubricant which not only provides a friction reducing effect between the thrust bearing pad friction surfaces and the collar of a shaft against which they act but also provides a cooling effect on the bearing.

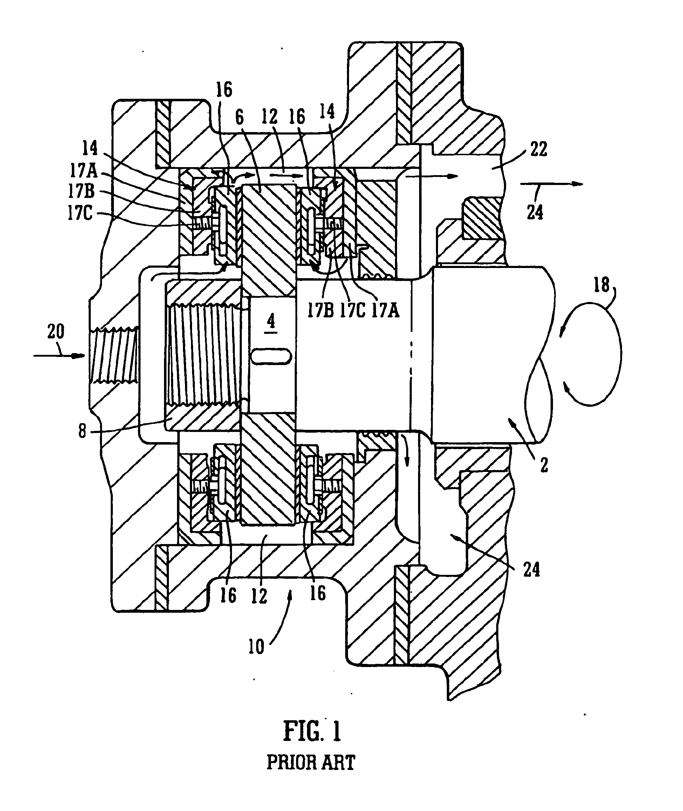

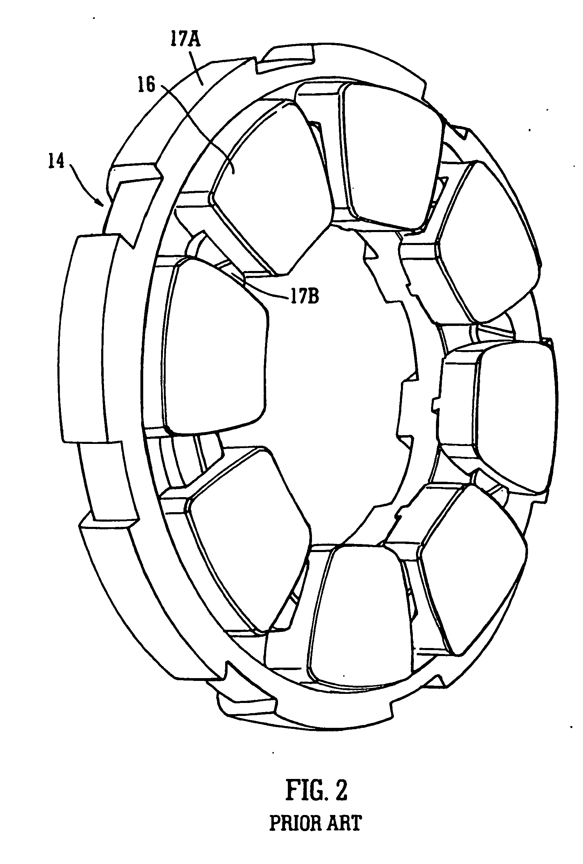

In this regard, Figure 1 shows a partially sectioned view of a shaft-end housing in which thrust bearings of the type with which this invention is concerned are shown. In particular, a shaft 2 having an end 4 provided with a collar 6 clamped to the end of the shaft by means of a nut or boss 8 is disposed in a housing indicated generally at 10. The housing is provided with a thrust bearing cavity 12 which receives the collar 6 and in which are disposed a pair of oppositely orientated circular thrust bearings 14, each having a plurality of circumferentially arranged bearing pads 16 which are arranged to tilt about a radial axis as previously described. Such a thrust bearing is shown in Figure 2, and from Figs. 1 and 2, it can be seen that the conventional arrangement is to mount an intermediate ring component 17B to a carrier body 17A, and then to secure the bearing pads 16 in pivoting manner to said intermediate ring component 17B by means of threaded fixing members 17C (not shown in Figure 2).

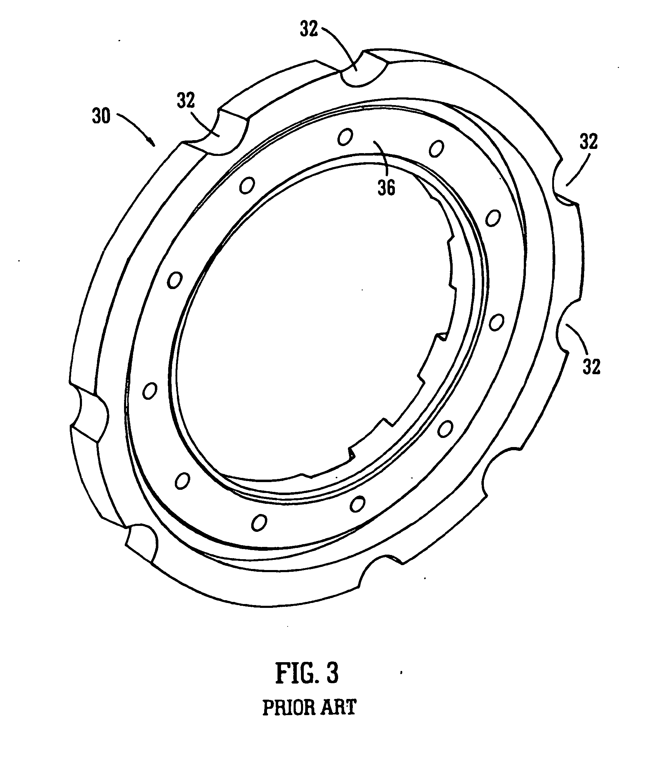

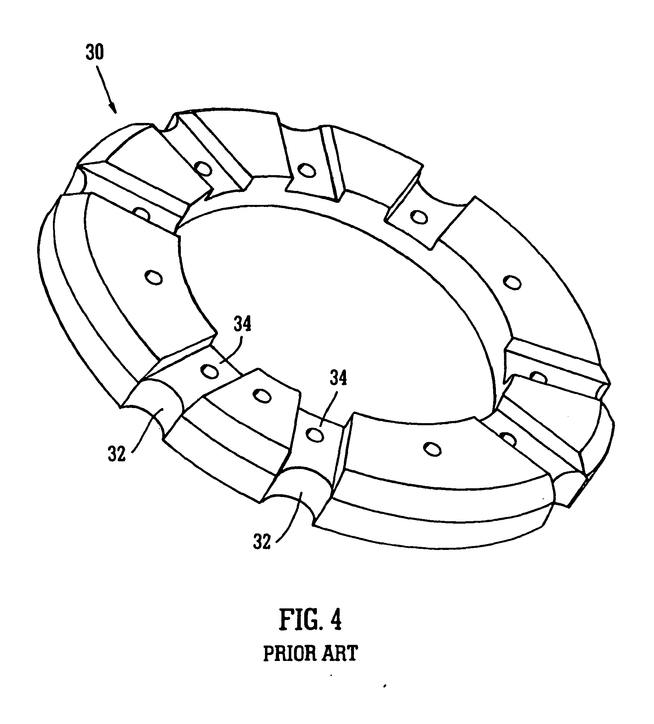

In use, the shaft 2 rotates as indicated at 18, and oil is pumped into the housing through inlet 20 and caused to circulate in the bearing cavity 12 around each of the thrust bearings before passing through an oil outlet 22 to a drain or sump 24. The arrows 26 shown within the bearing cavity 12 demonstrate the manner in which the oil flows, and in particular the oil is caused to flow around the rear surfaces of the thrust bearings by means of oil flow recesses and channels provided in the bearing pad carrier body, as can be seen in Figures 3 and 4.

In these figures, a typical carrier body 30 is shown having a plurality of circumferentially arranged recesses 32 provided in the peripheral surface thereof which feed oil circulation channels 34 provided in the rear surface of said carrier body. The bearing pads are mounted to the carrier body within a rebated inner portion 36 such that in use, the oil flows from the inner central aperture of the carrier body towards its outer periphery, over and around the bearing pads, and thence behind the carrier body by flowing down the passageways formed, firstly between the recesses 32 and in the inner surface of the housing in which the thrust bearings are disposed (oil thus flowing in an axial direction through such passageways), and secondly between the channels 34 and the front or rear walls of said housing (oil flowing radially through such passageways), before being again caused to flow over and around the bearing pads.

While such oil flows have in the past been thought to be satisfactory, the safety of the bearing is dependent to a certain degree on the operating temperature of the pads 16, and any additional cooling which can be achieved, through improved oil circulation or other design consideration, is desirable as the bearing will run with a greater safety margin.

It is an object of this invention to provide a thrust bearing which allows for improved oil circulation around the bearing pads thereof, and which thus provides a bearing with a longer life.

GB 2325029A discloses a tilting pad thrust bearing having features in common with preamble of appended claim 1 in the context of pads which are supported at a spacing from a carrier surface by a stack of at least two annular axially deflextable spring members.

### BRIEF SUMMARY OF THE DISCLOSURE

According to the invention there is provided a pad thrust bearing assembly as specified in appended claim 1.

Further aspects of the invention are bearing arrangements which incorporate aforesaid pad thrust bearing assembly, as specified in appended claims 14 or 15.

In one embodiment, the hub and rim portions of either or both of the locating component and intermediate component are discontinuous.

Preferably at least one of said locating component and said bearing pads has means which project so as to be capable of engaging the other, by which engagement the axial displacement of the bearing pads away from the carrier body is controlled.

Preferably, the locating component and the bearing pads cooperate by means of the bearing pads having one or more peripheral lips around their base to increase the peripheral dimensions thereof to an extent that said lip(s) cannot pass through the apertures defined in the locating component, but the bearing pad body is not prevented from doing so.

Most preferably, the locating ring, and further preferably the intermediate component are both cut from sheet steel, preferably by laser means. Alternatively, such components may be stamped, punched or cut by water jet.

Preferably each of the carrier body, the intermediate component and the locating component of the assembly is provided with secondary apertures through which fixings pass in the assembly to angularly orientate the components correctly with respect to one another.

In a most preferred arrangement, spacer elements are provided, integrally with said fixings or separately therefrom, to maintain the spaced apart relationship of the locating component and carrier body.

In a most preferred embodiment, the fixings used are of the type which preclude the need for the secondary apertures to be tapped, examples being clinch nuts or hank bushes, which are interferingly or weldably secured to the locating component, and allow for threaded fixing members to pass through the secondary apertures in the carrier body and intermediate component and be received in the tapped bore of the nut or bush during assembly.

In a most preferred embodiment, the rear surface of the carrier body, being on the opposite side of that on which the other components of the assembly are provided, is counter-sunk or counter-bored in the region of said secondary apertures to allow the bolt heads to be flush with or beneath the rear surface of said carrier body.

In an example not part of the invention one or other or both of the locating component and the intermediate component are split into two or more parts.

The primary advantage of the above described arrangement is that when the thrust bearing assembly is in-situ within apparatus and disposed around a rotating shaft of said apparatus, there is no need to provide the carrier body with the peripheral recesses or notches, and rear-surface lubricant flow grooves. Accordingly the carrier body of the assembly can be made with significantly less expense.

A further advantage is that permitting the lubricant flow between carrier body and locating component enhances the cooling effect provided by the lubricant to the bearing pads.

A specific embodiment of the invention is now provided by way of example with reference to the accompanying diagrams, wherein

### BRIEF DESCRIPTION OF THE DRAWINGS

Figure 1 is a sectional view of a prior art double thrust bearing in-situ in rotary apparatus having a rotationally driven shaft;
Figure 2 is a perspective view of a prior art thrust bearing;
Figures 3 and 4 provide perspective views of the front and rear surfaces of the carrier body of the prior art thrust bearing of Figure 2;
Figure 5 is an exploded perspective view of one embodiment of a thrust bearing according to the present invention; and
Figure 6 is a sectional view showing to thrust bearings as in Figure 5 in situ in apparatus having a rotationally driven shaft.

### DETAILED DESCRIPTION

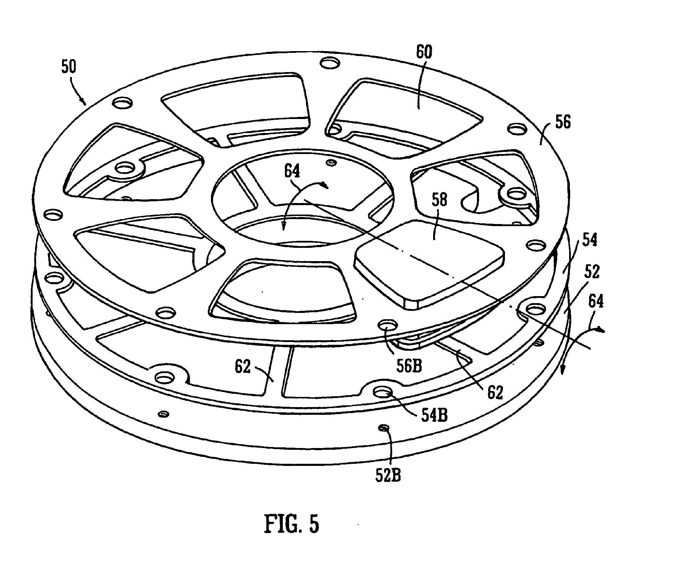

Referring firstly to Figure 5, there is shown a thrust bearing indicated at 50 which includes a generally circular, laser machined and generally solid carrier body 52, an intermediate component 54, and a locating component 56. Bearing pads, one of which is shown at 58, are arranged in the apertures 60 defined in the locating component 56 which is disposed on top of the intermediate component 54 such that the ribs 62 thereof are disposed beneath each of the bearing pads to act as fulcrums therefor. All of the locating component 56, the intermediate component 54, and the carrier body 52 are provided with secondary fixing apertures 56B, 54B, 52B which are aligned to receive suitable fixing members, in the form of screws or bolts which pass through from the rear surface of the carrier body 52 and into hank bushes or clinch nuts, being commonly available items, which are secured to the upper surface of the locating component 56. The rocking or pivoting motion of the bearing pads 58 is shown by arrows 64.

Although in this embodiment, the intermediate component is shown as being of planar, unitary construction as more fully described in applicant's co-pending application of even date, it is to be mentioned that a more conventional intermediate component may used, as shown in Figure 1.

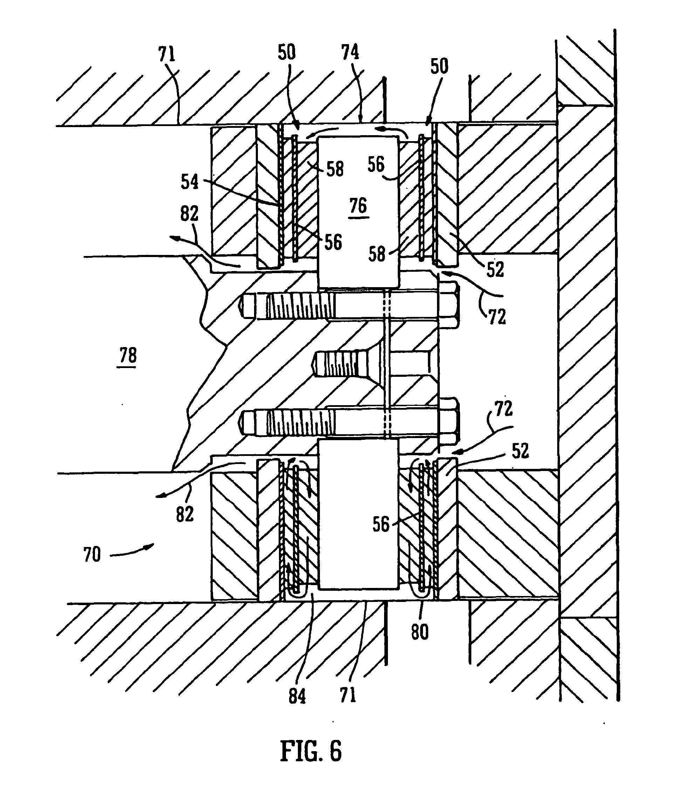

The primary distinction between this invention and the prior art configurations is the relative radial dimensions of the outer periphery of the locating component (which have heretofore not formed part of thrust bearing assemblies), and the corresponding carrier body, and also, the relative radial dimensions of the innermost perimeter of the locating component as compared to the radial perimetral dimension of the central aperture through the carrier body, in conjunction with the accessible space between the carrier body 52 and the location plate 56, as can be seen in Figs. 5 and 6.

In this regard, and referring to Figure 6 wherein a pair of thrust bearings 50 is shown in situ in apparatus 70 having a housing 71. In use, the oil flow enters the apparatus as shown at arrow 72, and enters the cavity 74 defined in the apparatus in which the thrust bearings 50 provide axial support for a collar 76 secured to a shaft 78 of the apparatus. The bearing pads 58 are shown in co-operation with opposite radial surfaces of the collar, and a locating component 56, is shown having radial outermost and innermost dimensions less than the outermost radial dimension, and greater than innermost dimension of the central aperture, respectively, of the carrier body 52. This permits a circulatory lubricant flow as indicated at 80. The oil flow between the locating component 56 and the carrier body 52 is to be noted. After the oil has been circulated within said cavity 74, it exits through the outlet 82.

In particular, it is to be noted that the outermost radial dimension of the locating component 56 defines an annular gap 84 through which the oil is allowed to flow to circulate around the sides of bearing pads 58 and between the locating component 56 and the carrier body 52. In this regard, the diameter of the housing 71 is important in that the inner surface of the housing 71, together with the outer periphery of the locating component, defines the annular gap through which oil can flow. It will be appreciated that in circumstances where the housing diameter is sufficient to accommodate bearing assemblies in such a manner that gaps are defined to the outside of both the carrier body and the locating component of said assemblies, there is no need for the locating component to be radially inset from the outer periphery of the carrier body, as a gap will be defined between the peripheries of both locating component and carrier body, and the innermost surface of the cylindrical housing in which they are disposed.

It should also be noted that the invention is also applicable to bearings where heat is extracted directly through the bearing housing where the bearing operates in an oil bath without a feed into or out of the bearing housing.

## Claims

1. A pad thrust bearing assembly comprising:
a substantially solid carrier body (52) of generally annular configuration having a central circular aperture and outer circular periphery;
a plurality of bearing pads (58) arranged on the carrier body between the perimeter of said central aperture and said outer circular periphery;
locating means (56) for maintaining both the separation and position of the bearing pads on the carrier body; and
fulcrum means (62) which permit said bearing pads to pivot about a substantially radial axis while in their predetermined position on the carrier body;
wherein the locating means is a locating component (56) which includes both a hub portion and a rim portion joined by ribs which together define apertures (60) in which the bearing pads (58) are received;
**characterised in that** the carrier body (52) is a flat body;
**in that** the fulcrum means are provided by an intermediate component (54) disposed
between the carrier body (52) and the locating component (56), said intermediate component having a hub portion and a rim portion joined by ribs (62) on which the bearing pads (58) are disposed and about which they can pivot;
**in that** the locating component (56) is maintained in spaced apart relationship with the carrier body (52) so as to allow for radially inward or outward lubricant flow between the locating component and the carrier body (52) and
**in that** the locating component (56) has outermost and innermost radial dimensions which satisfy at least one of the following conditions:
• the outermost radial dimension is less than the outer peripheral radial dimension of the carrier body (52)
• the innermost radial dimension is greater than the aperture perimetral radial dimension of the carrier body (52)
• both the above
such that lubricant is permitted to flow radially outwardly over the locating component (56) on one side thereof and radially inwardly on the other side thereof, one of said flows being between said locating component and the carrier body adjacent thereto.

2. An assembly according to claim 1 wherein at least one of the hub and rim portions of the locating component is discontinuous.

3. An assembly according to claim 1 wherein at least one of the hub and rim portions of the intermediate component is discontinuous.

4. An assembly according to any preceding claim wherein at least one of said locating component (56) and said bearing pads (58) has means which project so as to be capable of engaging the other, by which engagement the axial displacement of the bearing pads away from the carrier body is controlled.

5. An assembly according to claim 4 wherein the locating component (56) and the bearing pads (58) cooperate by means of the bearing pads having one or more peripheral lips around their base to increase the peripheral dimensions thereof to an extent that said lip(s) cannot pass through the apertures (60) defined in the locating component, but the bearing pad body is not prevented from doing so.

6. An assembly according to any preceding claim wherein the intermediate component (54) and the locating component (56) of the assembly are provided with secondary apertures through which bolts pass in the assembly to angularly orientate the components (54, 56) correctly with respect to one another.

7. An assembly according to claim 6 wherein fixing members are provided to receive the bolts and thus secure the assembly.

8. An assembly according to claim 7 wherein the fixing members are selected from the group of clinch nuts or hank bushes.

9. An assembly according to any of claims 7 or 8 wherein spacer elements are provided to maintain the spaced apart relationship of the locating component and carrier body, said spacer elements receiving at least a portion of the bolts.

10. An assembly according to claim 9 wherein the spacer elements form an integral part of the fixing members.

11. An assembly according to any of claims 7 to 10 wherein the fixing members are secured to the locating component.

12. An assembly according to any of claims 7 to 11 wherein the fixing members are provided with a tapped bore, and the bolts are threaded so as to be capable of being screwed into said tapped bore of said fixing members to secure the assembly.

13. An assembly according to any of claims 6 to 12 wherein the rear surface of the carrier body is counter-sunk in the region of the secondary apertures.

14. A bearing arrangement comprising a bearing housing (71) disposed around a thrust collar (76) mounted upon a rotatable shaft (78) and a pad thrust bearing assembly according to any preceding claim mounted inside the bearing housing (71), wherein the locating component has outermost and innermost radial dimensions which satisfy both of the following conditions:
• the outermost radial dimension is less than the outer peripheral radial dimension of the bearing housing (71) in the area between the carrier body and the thrust collar
• the innermost radial dimension is greater than the aperture perimetral radial dimension between the shaft and carrier body in the area between the carrier body (52) and the thrust collar (76)
such that lubricant is permitted to flow radially outwardly over the locating component on the side adjacent to the collar and radially inwardly on the other side thereof or vice versa, one of said flows being between said locating component (56) and the carrier body (52) adjacent thereto.

15. A bearing arrangement comprising a bearing housing (71) disposed around a thrust collar (76) mounted upon a rotatable shaft (78) and a pad thrust bearing assembly according to any preceding claim mounted inside the bearing housing (71), a first annular gap being defined between the outer periphery of the locating component (56) and said housing, and a second (annular gap) being defined between the inner perimeter of the locating component and said shaft (78) thus enabling lubricant flow through said annular gaps and between said locating component and the carrier body.

16. An assembly according to claim 15 wherein the carrier body (52) is snugly fitted within the housing (71) such that no annular gap exists between the outer periphery of said carrier body and the housing.

## Patentansprüche

1. Blockdrucklageranordnung, die umfasst:
einen im Wesentlichen festen Trägerkörper (52) mit einer im Allgemeinen ringförmigen Konfiguration mit einer zentralen kreisförmigen Öffnung und einem äußeren kreisförmigen Umfang;
eine Vielzahl von Lagerblöcken (58), die am Trägerkörper zwischen dem Umfang der zentralen Öffnung und dem äußeren kreisförmigen Umfang angeordnet sind;
eine Fixierungseinrichtung (56) zum Aufrechterhalten sowohl des Abstandes als auch der Position der Lagerblöcke am Trägerkörper; und
Drehpunkteinrichtungen (62), die ermöglichen, dass die Lagerblöcke um eine im Wesentlichen radiale Achse schwenken, während sie sich in ihrer vorbestimmten Position am Trägerkörper befinden;
wobei die Fixierungseinrichtung eine Fixierungskomponente (56) ist, die sowohl einen Nabenabschnitt als auch einen Randabschnitt umfasst, die durch Rippen verbunden sind, die zusammen Öffnungen (60) definieren, in denen die Lagerblöcke (58) aufgenommen sind;
**dadurch gekennzeichnet, dass** der Trägerkörper (52) ein flacher Körper ist;
dass die Drehpunkteinrichtungen durch eine Zwischenkomponente (54) vorgesehen sind, die zwischen dem Trägerkörper (52) und der Fixierungskomponente (56) angeordnet ist, wobei die Zwischenkomponente einen Nabenabschnitt und einen Randabschnitt aufweist, die durch Rippen (62) verbunden sind, an denen die Lagerblöcke (58) angeordnet sind und um die sie schwenken können;
dass die Fixierungskomponente (56) in einer beabstandeten Beziehung zum Trägerkörper (52) gehalten wird, um eine radiale Einwärts- oder Auswärtsschmiermittelströmung zwischen der Fixierungskomponente und dem Trägerkörper (52) zu ermöglichen, und
dass die Fixierungskomponente (56) äußerste und innerste radiale Abmessungen aufweist, die mindestens eine der folgenden Bedingungen erfüllen:
- die äußerste radiale Abmessung ist geringer als die äußere radiale Umfangsabmessung des Trägerkörpers (52),
- die innerste radiale Abmessung ist größer als die radiale Umfangsabmessung der Öffnung des Trägerkörpers (52),
- beide der obigen,
so dass einem Schmiermittel ermöglicht wird, radial nach außen über die Fixierungskomponente (56) auf einer Seite davon und radial nach innen auf der anderen Seite davon zu strömen, wobei eine der Strömungen zwischen der Fixierungskomponente und dem Trägerkörper benachbart dazu stattfindet.

2. Anordnung nach Anspruch 1, wobei mindestens einer des Naben- und/oder des Randabschnitts der Fixierungskomponente diskontinuierlich ist.

3. Anordnung nach Anspruch 1, wobei mindestens einer des Naben- und des Randabschnitts der Zwischenkomponente diskontinuierlich ist.

4. Anordnung nach einem vorangehenden Anspruch, wobei mindestens eine der Fixierungskomponente (56) und der Lagerblöcke (58) Einrichtungen aufweist, die vorstehen, so dass sie miteinander in Eingriff kommen können, durch welchen Eingriff die axiale Verlagerung der Lagerblöcke vom Trägerkörper weg gesteuert wird.

5. Anordnung nach Anspruch 4, wobei die Fixierungskomponente (56) und die Lagerblöcke (58) mittels dessen zusammenwirken, dass die Lagerblöcke eine oder mehrere Umfangslippen um ihre Basis aufweisen, um die Umfangsabmessungen davon auf ein Ausmaß zu vergrößern, dass die Lippe(n) nicht durch die Öffnungen (60) hindurchgehen kann (können), die in der Fixierungskomponente definiert sind, aber der Lagerblockkörper nicht daran gehindert wird.

6. Anordnung nach einem vorangehenden Anspruch, wobei die Zwischenkomponente (54) und die Fixierungskomponente (56) der Anordnung mit sekundären Öffnungen versehen sind, durch die Schrauben bei der Montage verlaufen, um die Komponenten (54, 56) in Bezug aufeinander korrekt im Winkel zu orientieren.

7. Anordnung nach Anspruch 6, wobei Befestigungselemente vorgesehen sind, um die Schrauben aufzunehmen und folglich die Anordnung zu befestigen.

8. Anordnung nach Anspruch 7, wobei die Befestigungselemente aus der Gruppe von Nietmuttern oder Stranghülsen ausgewählt sind.

9. Anordnung nach einem der Ansprüche 7 oder 8, wobei Abstandhalterelemente vorgesehen sind, um die beabstandete Beziehung der Fixierungskomponente und des Trägerkörpers aufrechtzuerhalten, wobei die Abstandhalterelemente mindestens einen Abschnitt der Schrauben aufnehmen.

10. Anordnung nach Anspruch 9, wobei die Abstandhalterelemente einen integralen Teil der Befestigungselemente bilden.

11. Anordnung nach einem der Ansprüche 7 bis 10, wobei die Befestigungselemente an der Fixierungskomponente befestigt sind.

12. Anordnung nach einem der Ansprüche 7 bis 11, wobei die Befestigungselemente mit einer Gewindebohrung versehen sind und die Schrauben mit einem Gewinde versehen sind, so dass sie in die Gewindebohrung der Befestigungselemente geschraubt werden können, um die Anordnung zu befestigen.

13. Anordnung nach einem der Ansprüche 6 bis 12, wobei die hintere Oberfläche des Trägerkörpers in dem Bereich der sekundären Öffnungen versenkt ist.

14. Lageranordnung mit einem Lagergehäuse (71), das um einen Druckkranz (76) angeordnet ist, der an einer drehbaren Welle (78) angebracht ist, und einer Blockdrucklageranordnung nach einem vorangehenden Anspruch, die innerhalb des Lagergehäuses (71) angebracht ist, wobei die Fixierungskomponente eine äußerste und eine innerste radiale Abmessung aufweist, die beide der folgenden Bedingungen erfüllen:
- die äußerste radiale Abmessung ist geringer als die äußere radiale Umfangsabmessung des Lagergehäuses (71) in dem Bereich zwischen dem Trägerkörper und dem Druckkranz,
- die innerste radiale Abmessung ist größer als die radiale Umfangsabmessung der Öffnung zwischen der Welle und dem Trägerkörper in dem Bereich zwischen dem Trägerkörper (52) und dem Druckkranz (76), so dass einem Schmiermittel ermöglicht wird, radial nach außen über die Fixierungskomponente auf der Seite benachbart zum Kranz und radial nach innen auf der anderen Seite davon oder umgekehrt zu strömen, wobei eine der Strömungen zwischen der Fixierungskomponente (56) und dem Trägerkörper (52) benachbart dazu stattfindet.

15. Lageranordnung mit einem Lagergehäuse (71), das um einen Druckkranz (76) angeordnet ist, der an einer drehbaren Welle (78) angebracht ist, und einer Blockdrucklageranordnung nach einem vorangehenden Anspruch, die innerhalb des Lagergehäuses (71) angebracht ist, wobei ein erster ringförmiger Spalt zwischen dem äußeren Umfang der Fixierungskomponente (56) und dem Gehäuse definiert ist, und ein zweiter (ringförmiger Spalt) zwischen dem inneren Umfang der Fixierungskomponente und der Welle (78) definiert ist, wobei somit eine Schmiermittelströmung durch die ringförmigen Spalte und zwischen der Fixierungskomponente und dem Trägerkörper ermöglicht wird.

16. Anordnung nach Anspruch 15, wobei der Trägerkörper (52) fest in das Gehäuse (71) eingefügt ist, so dass kein ringförmiger Spalt zwischen dem äußeren Umfang des Trägerkörpers und dem Gehäuse existiert.

## Revendications

1. Ensemble de palier à patin comprenant :
un corps porteur (52) sensiblement plein de configuration généralement annulaire ayant une ouverture circulaire centrale et une périphérie circulaire externe ;
une pluralité de patins (58) agencés sur le corps porteur entre le périmètre de ladite ouverture centrale et ladite périphérie circulaire externe ;
un moyen de positionnement (56) pour maintenir à la fois la séparation et la position des patins sur le corps porteur ; et
des moyens de pivot (62) qui permettent auxdits patins de pivoter autour d'un axe sensiblement radial tout en étant dans leur position prédéterminée sur le corps porteur ;
dans lequel le moyen de positionnement est un composant de positionnement (56) qui comprend à la fois une partie de moyeu et une partie de bord assemblées par des nervures qui définissent ensemble des ouvertures (60) dans lesquelles les patins (58) sont reçus ;
**caractérisé en ce que** le corps porteur (52) est un corps plat ;
**en ce que** les moyens de pivot sont fournis par un composant intermédiaire (54) disposé entre le corps porteur (52) et le composant de positionnement (56), ledit composant intermédiaire ayant une partie de moyeu et une partie de bord assemblées par des nervures (62) sur lesquelles les patins (58) sont disposés et autour desquelles ils peuvent pivoter ;
**en ce que** le composant de positionnement (56) est maintenu en relation espacée avec le corps porteur (52) afin de permettre l'écoulement du lubrifiant radialement interne ou radialement externe entre le composant de positionnement et le corps porteur (52) ; et
**en ce que** le composant de positionnement (56) a des dimensions radiales situées le plus à l'extérieur et le plus à l'intérieur qui satisfont au moins l'une des conditions suivantes :
• la dimension radiale située le plus à l'extérieur est inférieure à la dimension radiale périphérique externe du corps porteur (52),
• la dimension radiale située le plus à l'intérieur est supérieure à la dimension radiale périmétrale d'ouverture du corps porteur (52),
• les deux conditions mentionnées ci-dessus,
de sorte que le lubrifiant est autorisé à s'écouler radialement vers l'extérieur sur le composant de positionnement (56) sur son côté et radialement vers l'intérieur sur son autre côté, l'un desdits écoulements étant entre ledit composant de positionnement et le corps porteur adjacent à ce dernier.

2. Ensemble selon la revendication 1, dans lequel au moins l'une parmi la partie de moyeu et la partie de bord du composant de positionnement est discontinue.

3. Ensemble selon la revendication 1, dans lequel au moins l'une parmi la partie de moyeu et la partie de bord du composant intermédiaire est discontinue.

4. Ensemble selon l'une quelconque des revendications précédentes, dans lequel au moins l'un parmi ledit composant de positionnement (56) et lesdits patins (58) a un moyen qui fait saillie afin de pouvoir mettre en prise l'autre, grâce à laquelle mise en prise, le déplacement axial des patins à distance du corps porteur est contrôlé.

5. Ensemble selon la revendication 4, dans lequel le composant de positionnement (56) et les patins (58) coopèrent au moyen des patins ayant une ou plusieurs lèvres périphériques autour de leur base afin d'augmenter leurs dimensions périphériques sur une étendue sur laquelle ladite (lesdites) lèvre(s) ne peut (peuvent) pas passer à travers les ouvertures (60) définies dans le composant de positionnement, mais on n'empêche pas le corps de patin de le faire.

6. Ensemble selon l'une quelconque des revendications précédentes, dans lequel le composant intermédiaire (54) et le composant de positionnement (56) de l'ensemble sont prévus avec des ouvertures secondaires à travers lesquelles des boulons passent dans l'ensemble afin d'orienter correctement de manière angulaire les composants (54, 56) les uns par rapport aux autres.

7. Ensemble selon la revendication 6, dans lequel les éléments de fixation sont prévus pour recevoir les boulons et fixer ainsi l'ensemble.

8. Ensemble selon la revendication 7, dans lequel les éléments de fixation sont choisis parmi le groupe comprenant des écrous-rivets ou des manchons à tige.

9. Ensemble selon l'une quelconque des revendications 7 ou 8, dans lequel des éléments d'espacement sont prévus pour maintenir la relation espacée du composant de positionnement et du corps porteur, lesdits éléments d'espacement recevant au moins une partie des boulons.

10. Ensemble selon la revendication 9, dans lequel les éléments d'espacement font partie intégrante des éléments de fixation.

11. Ensemble selon l'une quelconque des revendications 7 à 10, dans lequel les éléments de fixation sont fixés au composant de positionnement.

12. Ensemble selon l'une quelconque des revendications 7 à 11, dans lequel les éléments de fixation sont prévus avec un alésage taraudé, et les boulons sont filetés afin de pouvoir être vissés dans ledit alésage taraudé desdits éléments de fixation pour fixer l'ensemble.

13. Ensemble selon l'une quelconque des revendications 6 à 12, dans lequel la surface arrière du corps porteur est fraisée dans la direction des ouvertures secondaires.

14. Ensemble de palier comprenant un boîtier de palier (71) disposé autour d'une rondelle de butée (76) montée sur un arbre rotatif (78) et un ensemble de palier à patin selon l'une quelconque des revendications précédentes, monté à l'intérieur du boîtier de palier (71), dans lequel le composant de positionnement a des dimensions radiales situées le plus à l'extérieur et le plus à l'intérieur qui satisfont les deux conditions suivantes :
• la dimension radiale située le plus à l'extérieur est inférieure à la dimension radiale périphérique externe du boîtier de palier (71) dans la zone située entre le corps porteur et la rondelle de butée,
• la dimension radiale située le plus à l'intérieur est supérieure à la dimension radiale périmétrale d'ouverture entre l'arbre et le corps porteur dans la zone située entre le corps porteur (52) et la rondelle de butée (76),
de sorte que le lubrifiant est autorisé à s'écouler radialement vers l'extérieur sur le composant de positionnement sur le côté adjacent à la rondelle et radialement vers l'intérieur sur son autre côté ou vice versa, l'un desdits écoulements étant situé entre ledit composant de positionnement (56) et le corps porteur (52) adjacent à ce dernier.

15. Agencement de palier comprenant un boîtier de palier (71) disposé autour d'une rondelle de butée (76) montée sur un arbre rotatif (78) et un ensemble de palier à patin selon l'une quelconque des revendications précédentes, monté à l'intérieur du boîtier de palier (71), un premier espace annulaire étant défini entre la périphérie externe du composant de positionnement (56) et ledit boîtier, et un second (espace annulaire) étant défini entre le périmètre interne du composant de positionnement et ledit arbre (78) permettant ainsi l'écoulement du lubrifiant à travers lesdits espaces annulaires et entre ledit composant de positionnement et le corps porteur.

16. Ensemble selon la revendication 15, dans lequel le corps porteur (52) est parfaitement ajusté à l'intérieur du boîtier (71) de sorte qu'il n'existe aucun espace annulaire entre la périphérie externe du corps porteur et le boîtier.
